(19) Europäisches Patentamt
European Patent Office
Office européen des brevets

(11) **EP 2 637 361 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(51) Int Cl.:
***H04L 12/40*** *(2006.01)*

(21) Anmeldenummer: **13155875.1**

(22) Anmeldetag: **20.02.2013**

(54) **Verfahren zur Bestimmung der Topologie eines seriellen asynchronen Datenbusses**

Method for determining the topology of a serial asynchronous data bus

Procédé de détermination de la topologie d'un bus de données asynchrone en série

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2012 DE 102012101881**

(43) Veröffentlichungstag der Anmeldung:
**11.09.2013 Patentblatt 2013/37**

(73) Patentinhaber: **Softing AG**
**85540 Haar (DE)**

(72) Erfinder: **Sixt, Stefan**
**82008 Unterhaching (DE)**

(74) Vertreter: **Karl, Christof**
**Bardehle Pagenberg Partnerschaft mbB**
**Patentanwälte, Rechtsanwälte**
**Prinzregentenplatz 7**
**81675 München (DE)**

(56) Entgegenhaltungen:
**EP-A2- 1 061 707    WO-A2-2007/116361**
**US-B1- 7 308 517**

**Beschreibung**

GEBIET DER ERFINDUNG

Die Erfindung betrifft ein Verfahren zur Bestimmung der Topologie eines seriellen asynchronen Datenbusses, an den wenigstens ein erster Busteilnehmer und eine zweiter Busteilnehmer angeschlossen sind, die über ein vorgegebenes Bus-Zugriffsprotokoll kommunizieren.

HINTERGRUND DER ERFINDUNG

Die Erfindung ist grundsätzlich anwendbar auf alle seriellen Datenbusse, insbesondere auf Feldbussysteme, wie PROFIBUS, Fieldbus Foundation, aber auch Ethernet und andere bekannte Feldbussysteme. Ein Feldbus verbindet in einer Anlage Feldgeräte wie Sensoren und Aktoren, auch als Slaves bezeichnet, zur Kommunikation und Steuerung mit einem Steuerungsgerät, auch als Master bezeichnet. Da mehrere Teilnehmer Nachrichten über dieselbe Leitung senden, ist für jedes Feldbussystem ein normiertes Bus-Zugriffsprotokoll festgelegt.

In der Regel umfasst ein Feldbussystem wenigstens ein Master-Feldgerät (Master) zur Steuerung der Anlage sowie eine Vielzahl von Slave-Feldgeräten (Slaves). Jeder Busteilnehmer wird durch eine zugeordnete eindeutige Adresse angesprochen. Die Kommunikation in einem Feldbussystem erfolgt über Bus-spezifische Telegramme oder Datenpakete oder Datenframes, wobei der Master in der Regel die Kommunikation steuert und Anfrage-Telegramme sendet, auf welche die Slaves mit Antwort-Telegrammen reagieren.

In der Regel weisen Feldbussysteme eine komplexe Netzwerktopologie mit einer großen Anzahl von Bussegmenten und Busteilnehmern auf. Z.B. ein PROFIBUS DP-Netz kann bis zu 127 Teilnehmer haben, wobei an einzelnen Bussegmenten einer Busleitung bis zu 32 Teilnehmer angeschlossen sein können. Innerhalb des Netzwerkes werden die einzelnen Bussegmente mittels Leitungstreibern, sogenannten Repeatern, verbunden. Um eine Diagnose und Fehleranalyse in einem solchen Bussystem vornehmen zu können, ist es notwendig, dass die Netztopologie des Bussystems, d.h. die Anordnung der Bussegmente und der Teilnehmer an den einzelnen Bussegmenten, bekannt ist. Bei der Fehlersuche z.B. sollten die angeschlossenen Geräte bei der Betrachtung der Signalqualität möglichst in der Reihenfolge ihrer Entfernung zum Messgerät betrachtet werden, damit der richtige Fehlerort bestimmt werden kann. Auch für die Planung physikalischer Messungen sollte die Topologie des Feldbusses bekannt sein, weil Messungen am Besten von den Enden und der Mitte der einzelnen Bussegmente durchgeführt werden. Wenn die Reihenfolge und Länge der Bussegmente und die Anschlussstellen der Geräte an den Segmenten nicht bekannt sind, kann eine Messung nicht sinnvoll geplant werden.

Da Feldbussysteme häufig "gewachsene", schlecht dokumentierte Strukturen haben, liegen häufig auch nicht ausreichende Kenntnisse über die Bustopologie vor. Da jedoch die Leitungen der Feldbussysteme oftmals in Kabelschächten verlegt sind, welche nicht einsehbar sind, ist es in der Regel auch nicht möglich, die Leitungen eines Bussystems unmittelbar nachzuverfolgen und einfach auszumessen. Es wurden daher verschiedene Messverfahren zur Bestimmung der Topologie von Feldbussen entwickelt.

Bei bekanntem Widerstandsbelag eines Kabels der Busleitung kann die Bustopologie auf der Grundlage von Gleichstrommessungen erfasst werden, indem nach und nach die einzelnen Busteilnehmer angepeilt werden und die Länge der Leitung vom Messpunkt bis zum Busteilnehmer über den Gleichstromwiderstand der Leitung ermittelt wird. Dieses Verfahren liefert nur ungenaue Ergebnisse, weil unbekannte Einflussgrößen wie die Übergangswiderstände zwischen Steckern und Kabeln, das Messergebnis verfälschen.

Ein präziseres bekanntes Messverfahren ist reflexionsbasierte Laufzeitmessung, die abhängig von der bekannten Ausbreitungsgeschwindigkeit der Messsignale die Kabellänge ermittelt. Diese Reflexions-Messverfahren sind aktive Messverfahren, d.h. sie senden aktiv Signale auf den Bus und erfassen die reflektierten Signale. Dies bedeutet, dass die Messverfahren möglichst nur am ruhenden Bus ausgeführt werden, weil die gesendeten Testsignale den laufenden Betrieb des Feldbus stören würden. Es sind zwar auch Verfahren bekannt, die während des regulären Busbetriebs aktiv Messungen durchführen, indem sie die von dem Buszugriffsprotokoll vorgesehene Übertragungspausen für die Messung nutzen; diese Verfahren bergen jedoch immer die Gefahr, dass die gesendeten Signale dennoch die Kommunikation stören.

Aus der WO 02/28061 A1 ist ein Verfahren zur Ermittlung der Netztopologie eines Bussystems bekannt, bei dem jedem Busteilnehmer ein initiierendes Messtelegram gesendet wird, auf das ein Diagnose-Repeater, der mehrere Bussegmente verbindet, mit einer Segmentkennung antwortet und die übrigen Busteilnehmer mit einem Antworttelegramm antworten, wobei der Diagnose-Repeater auch ein Messsignal an die antwortenden Busteilnehmer sendet, das von diesem reflektiert wird, und wobei aus der Zeitspanne zwischen dem Senden des Messsignals und dem Eintreffen der Reflexionssignale die Entfernung der antwortenden Busteilnehmer vom Diagnose-Repeater bestimmt wird. Dieses Verfahren nutzt zur Bestimmung der Entfernung der einzelnen Busteilnehmer grundsätzlich die Laufzeit des Messsignals, das dem Antworttelegramm des Slaves aufgeprägt wird. Ein sendender Slave wirkt als Impedanz, an dem das Messsignal reflektiert wird. Der Diagnose-Repeater wartet also ab, bis er das Antworttelegramm des Slaves empfängt. Zu diesem Zeitpunkt sendet der Slave noch, da die Signallaufzeiten kleiner sind als die Sendezeit des Telegramms. Ein Zeitfenster innerhalb des Telegramms, in dem sich der Pegel nicht ändert, wird dann für das Reflexionsverfahren verwendet. Das Verfahren ist ein reines Reflexionsverfahren und ist gut für niedrigere Baudraten geeignet. Bei höheren Baudraten wird das Zeitfenster zur Messung sehr klein und die Messung daher unzuverlässig.

Die DE 100 48 741 C1 und die DE 10 2005 055 429 A1 beschreiben ebenfalls Verfahren und Vorrichtungen zur Leitungsdiagnose eines Bussystems nach dem Prinzip der Reflexionsmessung.

Die DE 10 2010 000 249 A1 der Anmelderin beschreibt ein Verfahren zur Überprüfung der elektrischen Eigenschaften eines Kabels eines Feldbussystems, wobei dieses Verfahren darauf beruht, für die einzelnen Messungen die Beschaltung des Feldbusses zu verändern. Hierzu wird eine konfigurierbare Schalteinrichtung vorgesehen, die mit dem Bus verbunden werden kann.

Die Diagnose-Verfahren zur Bestimmung der Bustopologie des Standes der Technik basieren somit fast ausschließlich auf Reflexionsmessungen. Die einzige Ausnahme stellt das Verfahren zur Messung des elektrischen Widerstandes der Leitung dar. Die meisten Reflexionsmessungen sowie das elektrische Verfahren setzen einen ruhenden Bus voraus. Diese Messungen können also nicht im laufenden Betrieb durchgeführt werden. Die Genauigkeit der Reflexionsmessung nimmt mit zunehmender Baudrate der Datenübertragung ab.

Eine andere Art eines Diagnoseverfahrens für ein Feldbussystem ist aus der DE 10 2006 051 144 A1 bekannt. Dieses Verfahren dient weniger der Ermittlung der Bustopologie als der Ermittlung von Zuständen der Busteilnehmer durch Erfassen und Analysieren der auf dem Bus ausgetauschten Datenpakete und durch schritthaltendes Ableiten der Zustände der Busteilnehmer nach Art eines Zustandsautomaten

Schließlich offenbart das US-Patent US 7,308,517 B1 ein Verfahren zur Verbesserung der Leistung eines seriellen Hochgeschwindigkeitsbusses.

Der Erfindung liegt die Aufgabe zugrunde, ein Verfahren zur Bestimmung der Topologie eines seriellen asynchronen Datenbusses anzugeben, das die oben beschriebene Nachteile des Standes der Technik vermeidet und eine zuverlässige Ermittlung der Topologie erlaubt, ohne hierfür den laufenden Betrieb des Datenbusses unterbrechen zu müssen oder zu stören.

ÜBERBLICK ÜBER DIE ERFINDUNG

Die Erfindung löst die vorstehende Aufgabe mit dem in Anspruch 1 angegebenen Verfahren. Vorteilhafte Ausgestaltungen sind in den abhängigen Ansprüchen angegeben.

Die Erfindung sieht ein Verfahren zur Bestimmung der Topologie eines seriellen asynchronen Datenbusses vor, wobei wenigstens ein erster Busteilnehmer und ein zweiter Busteilnehmer an den Datenbus angeschlossen sind, die über ein vorgegebenen Bus-Zugriffsprotokoll kommunizieren. Das Protokoll umfasst definierte Anfrage- und Antworttelegramme. Insbesondere betrifft die Erfindung ein Feldbussystem, an das wenigstens ein Master-Gerät als erster Busteilnehmer und mehrere Slave-Geräte als zweite Busteilnehmer angeschlossen sind. Der erste Busteilnehmer, z.B. der Master, sendet Anfrage-Telegramme, die von dem zweiten Busteilnehmer, z.B. einem Slave, empfangen werden. Dieser sendet in Reaktion auf jedes Anfrage-Telegramm jeweils ein Antwort-Telegramm, und die Antwort-Telegramme werden wiederum von dem ersten Busteilnehmer empfangen. Erfindungsgemäß werden die zeitlichen Differenzen zwischen dem Empfangen eines jeweiligen Anfrage-Telegramms des ersten Busteilnehmers und dem Empfangen des zugehörigen Antwort-Telegramms des zweiten Busteilnehmers an einer ersten Messstelle an dem Datenbus ermittelt, die sich aus der Zeitverzögerungen zwischen Antwort- und Anfragetelegramm an der Messstelle ergeben (erste Vielzahl von zeitlichen Differenzen). Die erste Messstelle kann direkt an dem ersten Busteilnehmer oder, vom zweiten Busteilnehmer aus gesehen, hinter dem ersten Busteilnehmer liegen. Eine erste mittlere Antwortzeit wird aus der ersten Vielzahl der bestimmten Differenzen berechnet. Erfindungsgemäß werden weiterhin die zeitlichen Differenzen zwischen dem Empfangen des jeweiligen Anfrage-Telegramms des ersten Busteilnehmers und dem Empfangen des zugehörigen Antwort-Telegramms des zweiten Busteilnehmers an einer zweiten Messstelle an dem Datenbus ermittelt (zweite Vielzahl von zeitlichen Differenzen). Die zweite Messstelle kann direkt an dem zweiten Busteilnehmer oder, vom ersten Busteilnehmer aus gesehen, hinter dem zweiten Busteilnehmer liegen. Eine zweite mittlere Antwortzeit wird aus der zweiten Vielzahl der bestimmten Differenzen berechnet. Aus der Differenz der ersten mittleren Antwortzeit und der zweiten mittleren Antwortzeit kann erfindungsgemäß die Laufzeitverzögerung und somit die Distanz zwischen dem ersten Busteilnehmer und dem zweiten Busteilnehmer abgeleitet werden.

Die zweite mittlere Antwortzeitkann kann nach demselben Messprinzip in demselben Verfahrenszyklus ermittelt werden wie die erste mittlere Antwortzeit. Oder sie kann vorab für jeden zweiten Busteilnehmer ermittelt und in Form einer zusätzlichen Datenbasis vorgehalten werden. Die Vorabermittlung der mittleren Antwortzeit für den zweiten Busteilnehmer kann nach dem oben beschriebenen oder nach einem anderen Messprinzip erfolgen.

Die erste und die zweite Messstelle liegen vorzugsweise an den Busenden. Die Abstände zwischen dem Master und allen zwischen den beiden Messstellen befindlichen Slaves können dann ermittelt werden.

Die Erfindung beruht somit auf der Bestimmung der mittleren Antwortzeiten, die von bestimmten Positionen aus gemessen werden, und erlaubt, hieraus die Signallaufzeiten und damit die Entfernung zwischen Busteilnehmern zu bestimmen. Im einfachsten Fall einer Linientopologie des Datenbusses, mit einem Master an einem Ende des Busses und mehreren in Reihe geschalteten Slaves, genügen zur Realisierung der Erfindung zwei Messreihen. Eine Messreihe wird direkt am Master, oder von den Slaves aus gesehen hinter dem Master, durchgeführt und eine Messreihe wird an oder, vom Master aus gesehen, hinter dem letzten Slave in der Reihe durchgeführt. An jeder Messstelle wird eine Messreihe für jeden Slave durchgeführt, in der die zeitlichen Differenzen von Anfrage- und Antwort-Telegrammpaaren, die diesem Slave zugeordnet sind, erfasst werden und hieraus eine mittlere Antwortzeit für jeden Slave berechnet wird, und zwar jeweils aus Sicht der ersten Messstelle und aus Sicht der zweiten Messstelle. Die Differenz der mittleren Antwortzeiten an den beiden Messpositionen erlaubt die Bestimmung der Signallaufzeit zwischen dem ersten Busteilnehmer, z.B. dem Master, und jedem zweiten Busteilnehmer, z.B. den Slaves.

Erfindungsgemäß müssen die Messungen an den verschiedenen Messstellen nicht synchron durchgeführt werden, sondern sie können nacheinander unter Verwendung eines Messgeräts durchgeführt werden, das nacheinander an der ersten und der zweiten Messstelle angeschlossen wird.

Erfindungsgemäß müssen die Messungen auch nicht direkt am ersten und am zweiten Busteilnehmer, also z.B. am Master oder am Slave vorgenommen werden. Wie oben dargelegt, sollten die Messungen jedoch außerhalb der Verbindung zwischen Master und Slave und auf verschiedenen Seiten dieser Verbindung liegen. Bei der Differenzbildung zur Ermittlung der Laufzeitverzögerung kürzen sich dann die Kabelstrecken, die vom Anfrage-Telegramm und vom Antwort-Telegramm zum Messgerät hin gleichermaßen durchlaufen werden, heraus. Wie ebenfalls dargelegt, ist es für die Messung der Abstände mehrerer Slaves, die in Reihe hintereinander geschaltet sind, ausreichend, eine Messung am Master und eine Messung am oder hinter dem letzten Slave in der Reihe durchzuführen. Eine Messung an jedem Slave ist dagegen nicht notwendig. Wenn die mittleren Antwortzeiten der Slaves vorab ermittelt wurden, genügt die Durchführung einer Messreihe an dem oder in der Nähe des Masters.

Das erfindungsgemäße Verfahren kann während des laufenden Datenverkehrs durchgeführt werden und wertet die Sende- und Empfangszeiten definierter Anfrage- und Antwort-Telegramme aus, die regelmäßig über den Datenbus ausgetauscht werden. Besonders geeignet für die Zwecke der Erfindung sind Telegramme, die oft und an möglichst viele Teilnehmer verschickt werden. Bei PROFIBUS sind das zum Beispiel die Datenaustausch- und die FDL (Fieldbus Data Layer)-Status-Telegramme. Die Datenaustauschtelegramme werden in jedem PROFIBUS-Zyklus an jeden konfigurierten Busteilnehmer verschickt. Da die Zykluszeiten hier oft im Millisekundenbereich liegen, können in kurzer Zeit viele Messungen durchgeführt werden. Das FDL-Status-Telegramm dagegen hat den Vorteil, dass es an jede Adresse gesendet wird, eine feste Größe hat und oft schon von der Hardware des Busteilnehmers beantwortet wird. Dadurch kann man alle Geräte erfassen und die Antwortzeiten sind im Regelfall weniger breit gestreut als bei den komplexeren Telegrammtypen. Erfindungsgemäß ist es jedoch auch möglich, das Verfahren auf andere Arten von Telegrammen zu stützen.

Durch die Erfassung einer Vielzahl von Antwortzeiten an zwei unterschiedlichen Positionen innerhalb des Datenbus-Netzes und die Auswertung der mittleren Antwortzeiten ist es erfindungsgemäß möglich, Verzögerungen und zeitliche Schwankungen beim Senden von Antwort-Telegrammen, die nicht laufzeitbedingt sind, herauszufiltern. Die Laufzeitverzögerung $T_L$ zwischen dem ersten und dem zweiten Busteilnehmer kann erfindungsgemäß wie folgt berechnet werden:

$$T_L = \frac{(\overline{T}_{res1} - \overline{T}_{res2})}{2}, \tag{1}$$

wobei $\overline{T}_{res1}$ die vorstehend genannte erste mittlere Antwortzeit und $\overline{T}_{res2}$ die vorstehend genannte zweite mittlere Antwortzeit ist. In der Differenz kürzen sich nicht laufzeitbedingte Verzögerungen und Verzögerungen aufgrund von Leitungsstrecken zwischen den Busteilnehmern und dem Messgerät, die von Anfrage- und Antwort-Telegrammen gleichermaßen durchlaufen werden, heraus.

Sind die Antwortzeiten näherungsweise standardverteilt, so nimmt die Unsicherheit des Mittelwertes mit zunehmender Anzahl von Messwerten ab. Eine erste Schätzung des Fehlers der mittleren Antwortzeit MW(T) ist gegeben durch:

$$\text{Fehler(MW(T))} = \text{SD(T)} / N$$

wobei SD(T) die Standardabweichung der Antwortzeiten und N die Anzahl der Messungen sind.

Sofern ein Datenbus oder Datenbusabschnitt eine Linien-Topologie aufweist, kann aus den Laufzeitverzögerungen zwischen dem Master-Gerät und den mehreren Slave-Geräten jeweils unmittelbar die Reihenfolge der Slave-Geräte entlang des Datenbusses ermittelt werden. Wird für mehrere Slave-Geräte dieselbe oder nahezu dieselbe Laufzeit ermittelt, so ist dies ein Hinweis auf eine Datenbusabzweigung. Erfindungsgemäß werden dann die folgenden weiteren Verfahrensschritte ausgeführt: Bestimmen einer Vielzahl zeitlicher Differenzen für ein Slave-Gerät zwischen dem Empfangen von Anfrage-Telegrammen und dem Senden von zugehörigen Antwort-Telegrammen an einer dritten Messstelle an dem Datenbus, die dem Slave-Gerät zugeordnet ist, wobei die dritte Messstelle hinter der Datenbusabzweigung an dem Slave-Gerät oder, vom Master-Gerät aus gesehen, hinter dem Slave-Gerät liegt, und Berechnen einer mittleren Antwortzeit, die dem Slave-Gerät zugeordnet ist, das in der Datenbusabzweigung liegt, aus der Vielzahl der für das Slave-Gerät bestimmten Differenzen. Für jede Abzweigung des Datenbusses wird erfindungsgemäß eine zusätzliche Messreihe durchgeführt, wobei die zweite, dritte und jede weitere Messstelle vorzugsweise immer an dem Ende des jeweiligen abzweigenden Bussegments angeordnet wird.

Erfindungsgemäß werden alle Messungen vorzugsweise unter gleichen Betriebsbedingungen in Bezug auf Zustand und physikalische Parameter des Datenbusses ausgeführt.

Das erfindungsgemäße Verfahren kann durch zunehmend mehr Messungen die Genauigkeit der Distanzbestimmung erhöhen. Erfindungsgemäß werden der erste und der zweite Mittelwert jeweils aus wenigstens 20 Antwortzeiten abgeleitet, vorzugsweise jedoch aus wenigstens 50 oder sogar aus wenigstens 100 Antwortzeiten. Es ist auch möglich, zunächst den ersten und zweiten Mittelwert aus nur relativ wenigen Antwortzeiten zu bilden und mit fortschreitender Messdauer und Erfassung zusätzlicher Antwortzeiten die Mittelwertbildung zu verfeinern.

Während bei den oben beschriebenen Reflexionsmessungen des Standes der Technik die Präzision der Topologiebestimmung mit zunehmenden Baudraten der Datenübertragung abnimmt, hat sich bei der Erprobung der Erfindung gezeigt, dass die Präzision der Topologiebestimmung mit zunehmender Baudrate der Datenübertragung zunimmt. Ein Grund hierfür ist, dass bei zunehmenden Baudraten höhere Abtastfrequenzen zum Einsatz kommen, welche präzisere Zeitstempel und eine bessere zeitliche Auflösung mit sich bringen. Da die Zykluszeiten ebenfalls kürzer sind, ist es möglich, innerhalb derselben Zeiten mehr Messwerte zu ermitteln. Auch ist bei Betrieb mit höheren Baudraten die Schwankungsbreite der Busteilnehmer beim Senden von Antworttelegrammen geringer. Wenn man davon ausgeht, dass die Schwankungsbreite beim Senden von Antworttelegrammen eines Busteilnehmers auch nur innerhalb einer Bitzeit liegt, so beträgt diese Bitzeit bei einer Baudrate von 12 MByte gerade einmal 83 ns, während die Bitzeit bei einer Baudrate von 1,5 MByte schon 667 ns beträgt und bei niedrigeren Baudraten entsprechend höher ist. Unter der Annahme einer Datenausbreitungsgeschwindigkeit, die etwa 60 % der Lichtgeschwindigkeit, also 4,3 ns/m beträgt, entspricht also eine Schwankung der Antwortzeit von einer Bitbreite bei 12 MBaud (83 ns) etwa 19 m und bei 1,5 MBaud (667 ns) etwa 155 m. Schon aus diesem einfachen Vergleich ist ersichtlich, dass die Erfindung mit höheren Übertragungsraten genauere Messungen erzielen sollte.

Die Erfindung gibt ein Verfahren zur Bestimmung der Topologien eines seriellen asynchronen Datenbusses an, das auf der Auswertung von Telegrammen des Datenverkehrs beruht, welche während des regulären Busbetriebs ausgetauscht werden. Das erfindungsgemäße Verfahren lässt sich durch einfaches Mithören der Telegramme mit Hilfe eines Messgerätes an wenigstens einer Messstelle an dem Datenbus, sofern die mittleren Antwortzeiten der Slaves bekannt sind, oder an wenigstens zwei Messstellen des Datenbusses, sofern die mittleren Antwortzeiten der Slaves noch ermittelt werden müssen, realisieren. Es ist weder eine besondere Beschaltung des Datenbusses notwendig, noch müssen für die Laufzeitmessung und Topologiebestimmung besondere Messtelegramme oder andere Messsignale auf den Datenbus gesandt werden. Praktische Versuche mit dem erfindungsgemäßen Verfahren haben gezeigt, dass schon mit kurzen Messzyklen präzise und zuverlässige Ergebnisse erhalten werden können.

KURZE BESCHREIBUNG DER ZEICHNUNGEN

Die Erfindung ist im Folgenden mit weiteren Einzelheiten anhand eines Ausführungsbeispiels mit Bezug auf die Zeichnungen näher erläutert. In den Figuren zeigen:

| | |
|---|---|
| Fig. 1 | eine vereinfachte schematische Darstellung eines Feldbusses mit einem Master und einem Slave; |
| Fig. 2 | eine vereinfachte schematische Darstellung der Signallaufzeiten zwischen dem Master und dem Slave des Feldbussystems der Fig. 1; |
| Fig. 3 | eine vereinfachte schematische Darstellung eines Feldbusses mit einem Master und einem Slave zur Erläuterung der Erfindung; |
| Fig. 4 | eine ähnliche Darstellung wie Fig. 3 zur Erläuterung eines ersten Messaufbaus gemäß der Erfindung; |
| Fig. 5 | eine ähnliche Darstellung wie Fig. 3 zur Erläuterung eines zweiten Messaufbaus gemäß der Erfindung; |
| Fig. 6 | eine ähnliche Darstellung wie Fig. 3 zur Erläuterung eines weiteren Messaufbaus; |
| Fig. 7 | ein Beispiel für die Topologie eines Datenbusses zur Erläuterung des erfindungsgemäßen Verfahrens; |

Fig. 8, 9 und 10    Topologiebilder, welche sich nach Durchführung von Messreihen an den Messpositionen 1 und 2, an Position 3 bzw. an Position 4 ergeben;

Fig. 11    ein Ablaufdiagramm eines Ausführungsbeispiels eines ersten Teils des erfindungsgemäßen Verfahrens zur Erfassung von Antwortzeiten am Master; und

Fig. 12    ein Ablaufdiagramm eines Ausführungsbeispiels eines zweiten Teils des erfindungsgemäßen Verfahrens zur Erfassung von Antwortzeiten am Slave.

BESCHREIBUNG DER AUSFÜHRUNGSBEISPIELE

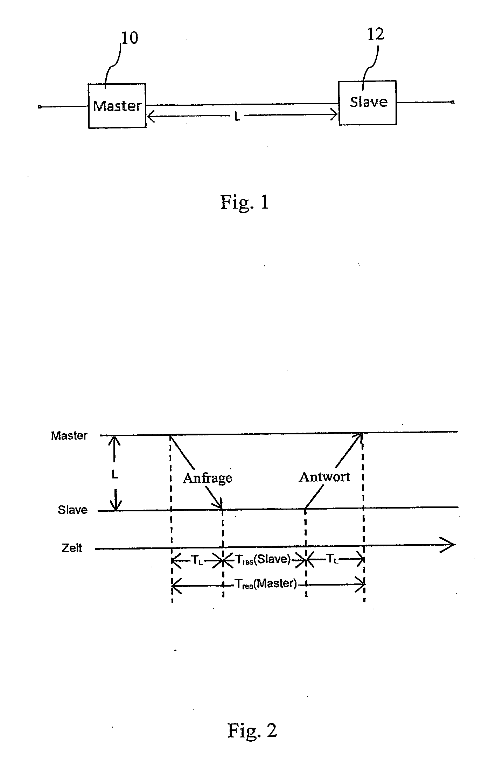

Die Erfindung beruht auf folgenden Überlegungen. Im einfachsten Fall besteht ein Netzwerk aus einem Master 10 (als Beispiel für einen ersten Busteilnehmer) und einem Slave 12 (als Beispiel für einen zweiten Busteilnehmer), die über ein Kabel der Länge L miteinander verbunden sind, dies ist in Fig. 1 dargestellt.

Das Anfrage-Telegramm wird vom Master 10 ausgesendet und nach der Laufzeit $T_L$ vom Slave empfangen. Dieser sendet nach einer gewissen Verzögerungszeit ($T_{res}$(Slave)) die Antwort, die nach der gleichen Laufzeit $T_L$ beim Master eintrifft. Dies ist in Fig. 2 veranschaulicht. Die Antwortzeit des Slaves gemessen am Master $T_{res}$(Master) ergibt sich aus:

$$T_{res}(\text{Master}) = T_L + T_{res}(\text{Slave}) + T_L \qquad (2)$$

wobei $T_L$ die Laufzeit des Signals zwischen Master und Slave ist und $T_{res}$(Slave) die Zeit, die der Slave nach Empfang des Telegramms braucht, bis er die Antwort losschickt. Wenn man am Slave misst, erhält man als Antwortzeit $T_{res}$(Slave), da hier die Laufzeiten entfallen.

Die Differenz der beiden Antwortzeiten $T_{res}$(Master) - $T_{res}$(Slave) ergibt die doppelte Laufzeit, gemäß der oben angegebenen Formel (1). Die Entfernung L ergibt sich dann aus:

$$L = T_L * v_{sig} \qquad (3)$$

wobei $v_{sig}$ die Signalausbreitungsgeschwindigkeit im Feldbus-Kabel darstellt. Diese kann in einem Ausführungsbeispiel mit ca. 60% der Lichtgeschwindigkeit, d.h. ca. 4,3 ns/m, angenommen werden.

Könnte man also dieselben Signale, nämlich die Anfrage- und Antwort-Telegramme, an den beiden Messpunkten an Master und Slave erfassen, so könnte man bei Zugrundelegung eines idealen Systems direkt die Entfernung zwischen Master und Slave ermitteln. Hierzu bräuchte man jedoch zwei oder mehr Messgeräte, um an dem Master und den Slaves die Sende- und Empfangs- bzw. Empfangs- und Sendezeiten für dieselben Anfrage- und Antwort-Telegramme zu erfassen.

Die Erfindung schafft ein Verfahren, das mit aufeinanderfolgenden Messungen am Master und an oder hinter einem oder mehreren Slaves verschiedene Signale zu unterschiedlichen Zeitpunkten erfasst und die Laufzeit und somit die Distanz zwischen Master und Slave durch die Auswertung der Differenz der mittleren Antwortzeiten ermittelt. Sofern die zeitlichen Schwankungen der Antwortzeiten statistisch verteilt sind, nimmt die Abweichung des Mittelwertes mit der Anzahl der Messungen ab. Für die Mittelwerte MW der Antwortzeiten gilt in Bezug auf die Messung am Master:

$$MW(T_{res}(\text{Master})) = MW(T_L + T_{res}(\text{Slave}) + T_L) = T_L + MW(T_{res}(\text{Slave})) + T_L \qquad (4)$$

Unter der Voraussetzung, dass sich die mittlere Antwortzeit des Slaves $MW(T_{res}$(Slave)) nicht ändert, kann diese durch eine spätere Messung am Slave ermittelt werden. Die Differenz der mittleren Antwortzeiten ergibt dann die doppelte Laufzeit, gemäß der obigen Formel (1)

Durch die erfindungsgemäße Mittelwertbildung können Verzögerungen der Messgeräte sowie systematische und statistisch verteilte Schwankungen der Antwortzeiten der zweiten Busteilnehmer, z.B. Slaves, herausgefiltert werden.

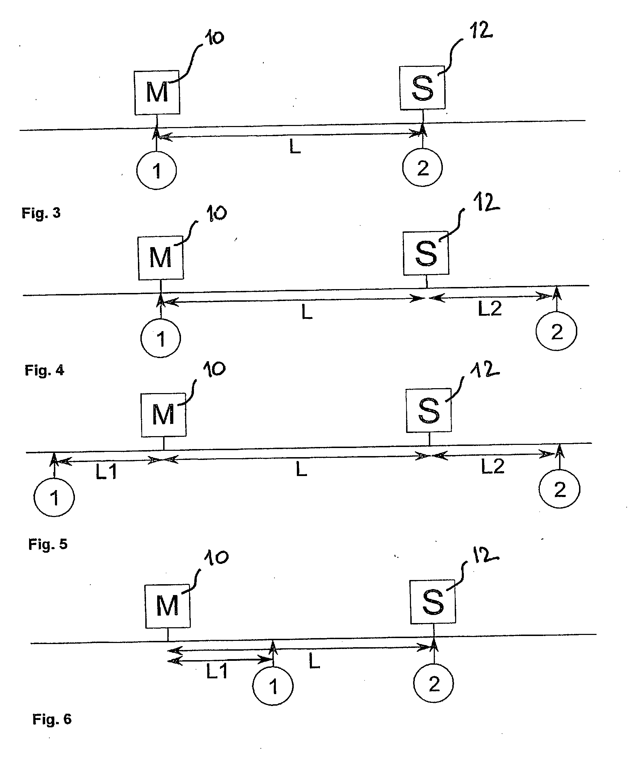

Im Folgenden ist mit Bezug auf die Fig. 3 bis 6 erläutert, wie ein Messaufbau an einem Datenbus mit Linientopologie, der einen Master 10 und einen Slave 12 aufweist, aufgebaut sein kann. Wie oben erläutert, müssen die beiden Messstellen (1) und (2) nicht direkt am Master 10 bzw. am Slave 12 angeordnet sein. Es ist ausreichend, wenn die Messstellen (1) und (2) auf den beiden Seiten der Verbindung zwischen Master 10 und Slave 12 angeordnet sind. Die Messaufbauten der Fig. 3, 4 und 5 liefern bei dem erfindungsgemäßen Verfahren das gleiche Ergebnis.

In dem Messaufbau der Fig. 3 werden beide Messstellen (1) und (2) direkt am Master 10 bzw. am Slave 12 angeordnet. An der Messstelle (1) wird die mittlere Antwortzeit ermittelt, die dem ersten Busteilnehmer (Master) zugeordnet ist, und an der Messstelle (2) wird die mittlere Antwortzeit ermittelt, die dem zweiten Busteilnehmer (Slave) zugeordnet ist. Bei der Berechnung der Differenz der mittleren Antwortzeiten kürzt sich jeweils die mittlere Antwortzeit des Slaves MW ($T_{res}$(Slave)) heraus, so dass sich als Ergebnis unmittelbar die doppelte Laufzeit ergibt.

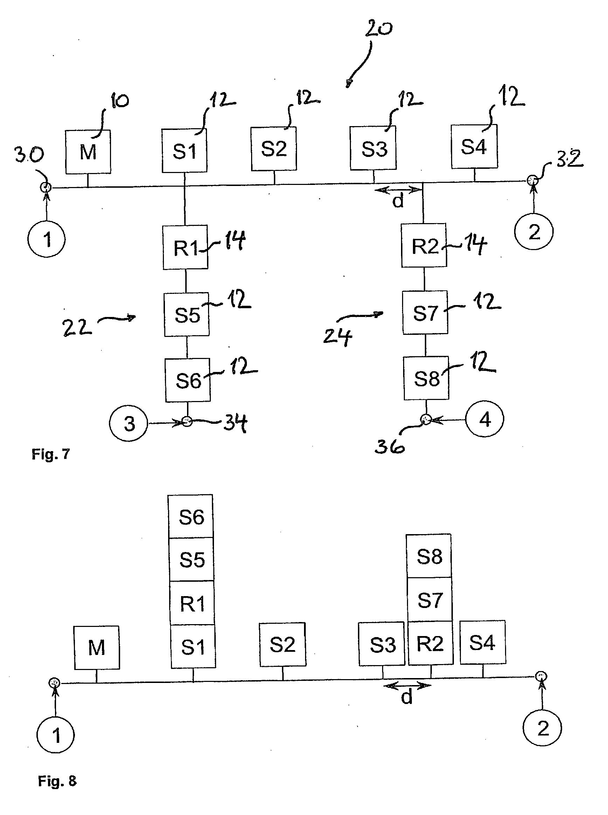

In dem Messaufbau der Fig. 4 ist die Messstelle (2) vom Master 10 aus gesehen hinter dem Slave 12 angeordnet, und bei Messaufbau der Fig. 5 ist zusätzlich die Messstelle (1) aus Sicht des Slaves 12 hinter dem Master angeordnet. In dem Aufbau der Fig. 4 kommen die vom Master 10 und vom Slave 12 ausgesandten Signale aufgrund der zusätzlichen Kabellänge L2 jeweils verzögert an der Messstelle (2) an, so dass an der Messstelle (2) dieselbe mittlere Antwortzeit des Slaves 12 gemessen wird wie in dem Aufbau der Fig. 3. Gleiches gilt auch für den Messaufbau der Fig. 5, weil auch bei der Messstelle (1) die vom Master 10 gesendeten und empfangenen Signale jeweils mit derselben Verzögerung, aufgrund der Kabellänge L1, ankommen. Grundsätzlich gilt, dass sich die gemessene Antwortzeit nicht ändert, wenn der Messort auf eine Position außerhalb der Verbindung zwischen Master 10 und Slave 12 verschoben wird und auf verschiedenen Seiten von Master und Slave liegt. Wie mit Bezug auf die Fig. 7 bis 10 noch erläutert wird, kann dies ausgenutzt werden, um die mittleren Antwortzeiten mehrerer Slaves mit ein und demselben Messaufbau zu ermitteln.

Befindet sich dagegen eine Messstelle zwischen Master 10 und Slave 12, wie in Fig. 6 gezeigt, so wird an dieser Messstelle (1) eine kürzere Antwortzeit ermittelt und die berechnete Distanz zwischen Master und Slave würde dann nicht mehr der wirklichen Entfernung, sondern der Entfernung zwischen Messgerät (1) und Slave 12 entsprechen. Dieser Aufbau ist daher für die Erfindung nicht geeignet.

In Fig. 7 ist eine beispielhafte Topologie dargestellt, um zu veranschaulichen, dass mit der Erfindung nicht nur Linientopologien, sondern auch verzweigte Topologien bestimmt werden können. In dem Topologiebeispiel der Fig. 7 umfasst das Busnetzwerk einen Master 10, 8 Slaves 12, die mit S1 bis S8 bezeichnet sind, sowie zwei Repeaterstationen 14, die mit R1 und R2 bezeichnet sind. In dem bevorzugten Ausführungsbeispiel wird zur Bestimmung der Gesamttopologie nacheinander an allen Busenden gemessen. Die Messorte (1) bis (4) sind an den jeweiligen Busenden durch Kreise dargestellt.

Das Beispielsnetz besteht aus drei physikalischen Segmenten 20, 22, 24 mit dem einen Master 12, zwei Repeaterstationen 14, beispielsweise Diagnose-Repeater mit eigener Adresse, und den insgesamt acht Slaves 12. Zusätzlich sind vier Busabschlüsse 30, 32, 34, 36 vorgesehen, die gleichzeitig als Messpositionen (1) bis (4) dienen. Das Hauptsegment 20 besteht aus dem Master M und den vier Slaves S 1 bis S4. Die zwei kammförmig abzweigenden Nebensegmente 22, 24 sind über die Repeater R1 und R2 mit dem Hauptsegment 20 verbunden. Der Repeater R1 ist direkt an dem Slave S1 angeordnet. Der Repeater R2 ist in einem Abstand d von dem Slave S3 am Hauptsegment 20 angeschlossen.

In diesem Ausführungsbeispiel kann die gesamte Topologie mit vier Messreihen ermittelt werden, wie im Folgenden erläutert ist. Zunächst werden zwei Messreihen an den beiden Enden 30, 32 des Hauptsegmentes 20, an den Messpositionen (1) und (2) durchgeführt. Auf der Grundlage dieser Messreihen können die Abstände zwischen dem Master M und den Slaves S1, S2, S3 und S4 ermittelt werden. In der ersten Messreihe, an Position (1) werden die mittleren Antwortzeiten der Slaves S 1 bis S4 aus Sicht des Masters ermittelt, und in der zweiten Messreihe an der Messposition (2) werden die mittleren Antwortzeiten der Slaves S1, S2, S3 und S4 direkt ermittelt, also ohne die zusätzliche Laufzeitverzögerung zwischen Master und Slaves. Durch Differenzbildung können dann jeweils die Laufzeiten und somit die Abstände zwischen dem Master und den einzelnen Slaves berechnet werden.

Bei diesem Verfahren ergeben sich auch Werte für die Slaves S5 bis S8, die auf den Nebensegmenten 22, 24 des Datenbusses liegen. Für die Entfernung der Slaves S5 und S6 zum Master M wird nämlich der gleiche Wert berechnet wie für S1, weil die Abzweigung ihres Nebensegments 22 bei S 1 liegt. Für die Entfernung der Slaves S6 und S7 wird ebenfalls die Entfernung des zugehörigen Abzweigs ermittelt, also die Entfernung des Slaves S3 plus die Strecke d. Aus der Übereinstimmung der Entfernungen für die Slaves S5 und S6 kann zunächst geschlossen werden, dass diese auf einem Nebensegment liegen. Das gleiche gilt für die Slaves S7 und S8. Die für diese Slaves ermittelten Abstände ergeben somit jeweils die Entfernung vom Master M zur zughörigen Abzweigung des Nebensegments 22, 24. Durch die Messreihen an den Messstellen (1) und (2) ergibt sich das in Fig. 8 gezeigte Topologiebild. Die übereinander gezeichneten Stationen haben jeweils den gleichen berechneten Abstand zum Master M.

Um die Topologie der Nebensegmente 22, 24 richtig zu ermitteln, werden daher weitere Messreihen an den Messpositionen (3) und (4) durchgeführt. Aufgrund der Messreihen an den Messpositionen (1) und (3) können die korrekten Abstände zwischen dem Master M und den Slaves S5 und S6 ermittelt werden. Für alle anderen Slaves ergibt sich jedoch wiederum die gleiche Entfernung zum Master, nämlich die Entfernung zwischen Master und Slave S1. Hieraus kann geschlossen werden, dass die anderen Stationen S1, S2, S3, S4, S7, S8 in Bezug auf die Verbindung vom Master M zu den Slaves S5 und S6 auf einem Nebensegment liegen, dessen Entfernung zum Master M gleich der Strecke zwischen dem Master M und dem Slave S 1 ist. Um die genaue Entfernung vom Master M zu den Slaves S5 und S6 zu berechnen, muss auch die Verzögerungszeit des Repeaters R1 bekannt sein, weil dessen Verzögerungszeit sonst als zusätzliche Laufzeit gewertet wird und sich eine zu große Entfernung ergibt.

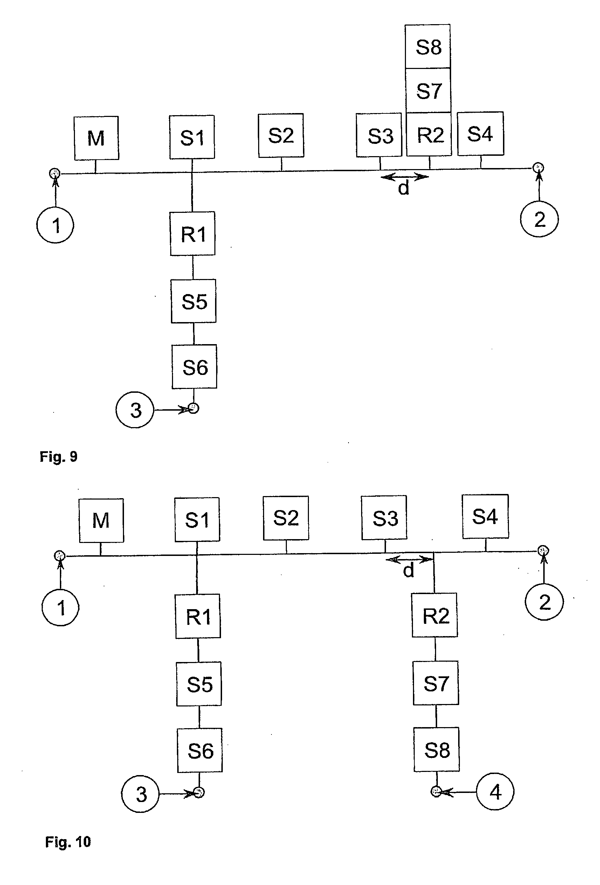

Die Kombination der Ergebnisse aus den Messreihen an den Messpositionen (1), (2) und (3) ergibt das in Fig. 9 gezeigte Topologiebild. Würde man nur die Messreihen an den Messpositionen (1) und (3) berücksichtigen, so würde sich ein Bild ergeben, bei der die Slaves S1 bis S4, S7, S8 und der Repeater R2 alle bei der Abzweigung an dem Slave S1 liegen. Unter Berücksichtigung der zuvor bereits durchgeführten Messreihe können jedoch schon das Hauptsegment 20 sowie das erste Nebensegment 22 weitgehend richtig dargestellt werden.

Die Repeaterfunktionalität der Repeaterstation R1 kann durch die Messung nicht direkt erkannt werden. Diese Repeaterstation R1 macht sich durch eine zusätzliche Laufzeitverzögerung und, sofern die Repeaterstation nicht bekannt ist, durch einen größeren Abstand zu den Slaves S5 und S6 bemerkbar.

Bei Durchführung einer weiteren Messreihe an der Messposition (4) können schließlich auch die korrekten Abstände zwischen dem Master M und den Slaves S7 und S8 dargestellt werden. Um die richtige Absolutposition zu berechnen, muss wiederum die Verzögerungszeit der Repeaterstation R2 bekannt sein. In Fig. 10 ist das Topologiebild dargestellt, dass sich nach Durchführung von Messungen an allen vier Messpositionen (1) bis (4) ergibt.

Für das beschriebene Ausführungsbeispiel gilt, dass zur Bestimmung der Gesamttopologie eines Datenbusses mit N Segmenten N+1 Messdatensätze abgeleitet werden. Für die Ermittlung der Distanzen zwischen Master und Slaves werden N x (N+1)/2 Paare von Messungen, z.B. jeweils an gegenüberliegenden Busenden, ausgewertet. Für jedes Paar von Messungen ergeben sich Entfernungen für jeden Slave von dem Master entlang einer Linie, die in einem Entfernungsvektor dargestellt werden können. Wenn von jedem Busende aus gemessen wird, so ist der wahre Abstand eines Slaves vom Master das Maximum aller ermittelten Abstände für diesen Slave. Ein kleinerer als der maximale Abstand für einen Slave gibt einen Hinweis auf die Entfernung eines Abzweigs eines Bussegments, auf dem der Slave liegt. Wenn bei einer Messserie für mehrere Slaves derselbe Abstand ermittelt wird, ist dies ferner ebenfalls ein Hinweis darauf, dass sich diese Slaves in Bezug auf die beiden Messpositionen in demselben Nebensegment befinden oder direkt an der Abzweigung liegen.

Wenn man annimmt, dass die Abstände zwischen dem Master M und den Slaves S1, S2, S3, ..., S8 den Strecken L1, L2, L3, ..., L8 entsprechen, so ergibt sich für die Slaves S1, S2, S3, ..., S8 aus den Messdatensätzen an den Messstellen (1) und (2) der Entfernungsvektor zu:

$$
\begin{bmatrix}
L1 \\
L2 \\
L3 \\
L4 \\
L1 \\
L1 \\
L3 + d \\
L3 + d
\end{bmatrix}
$$

Aus den Messdatensätzen der Messstellen (1) und (3) ergibt sich:

$$
\begin{bmatrix}
L1 \\
L1 \\
L1 \\
L1 \\
L5 \\
L6 \\
L1 \\
L1
\end{bmatrix}
$$

Und aus den Messdatensätzen an den Messstellen (1) und (4) ergibt sich:

$$\begin{bmatrix} L1 \\ L2 \\ L3 \\ L3+d \\ L1 \\ L1 \\ L7 \\ L8 \end{bmatrix}$$

Der endgültige Entfernungsvektor ergibt sich dann aus dem Maximum aller ermittelten Abstände für die Slaves zu:

$$\begin{bmatrix} L1 \\ L2 \\ L3 \\ L4 \\ L5 \\ L6 \\ L7 \\ L8 \end{bmatrix}$$

Das erfindungsgemäße Verfahren kann einen Topologie-Bilder verwenden, der die ermittelten Entfernungsvektoren in eine für die Darstellung der Topologie geeignete Form bringt.

In einem Ausführungsbeispiel sei angenommen, dass zur Berechnung der mittleren Antwortzeiten M Telegramm-Paare, also Anfrage- und Antwort-Telegramme, beobachtet werden, wobei in diesem Ausführungsbeispiel M = 100. Wenn die beobachteten Telegramm-Paare Datenaustauschtelegramme sind, so werden diese beispielsweise in einem PROFIBUS-Netz einmal pro Eingabe/Ausgabe-Zyklus gesandt, wobei die Dauer eines Eingabe-Ausgabe-Zyklus in der Größenordnung von 10 bis 100 ms liegen kann. Wenn an dem Feldbussystem z.B. 30 Slaves in Linie angeschlossen sind, so kann unter dieser Voraussetzung innerhalb von 300 bis 3000 ms eine Antwortzeit pro Slave ermittelt werden. Wenn man weiter davon ausgeht, dass zur Bildung der mittleren Antwortzeit jedes Slaves jeweils 100 Antwortzeiten am Master und 100 Antwortzeiten an oder hinter jedem Slave bestimmt werden sollen, wobei diese Messungen mit einem einzigen Messgerät nacheinander ausgeführt werden, beträgt die benötigte Messzeit an jeder Messstelle rund 0,5 bis 5 Minuten. Dabei greift die Messung nicht in den Datenaustausch auf dem Feldbus ein, sondern beobachtet den Datenverkehr auf z.B. die Datenaustauschtelegramme.

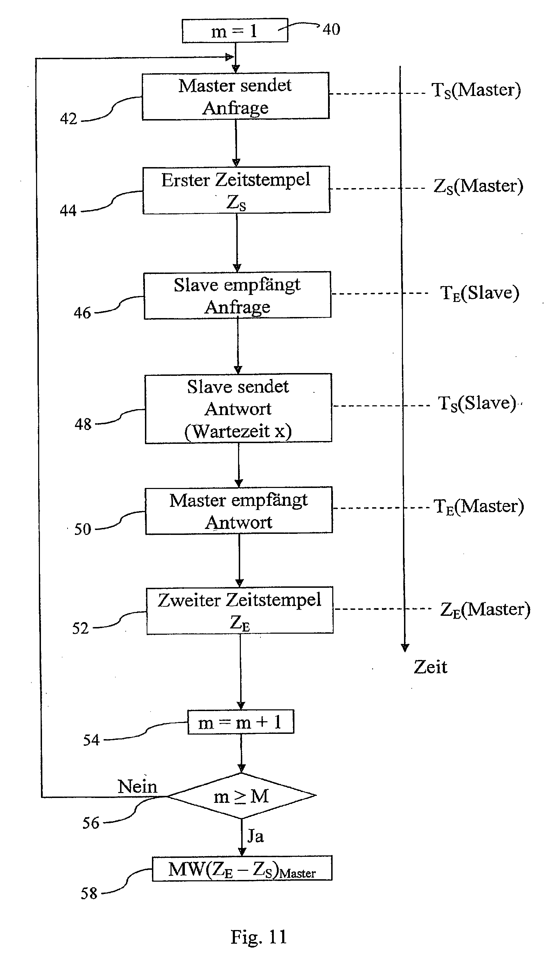

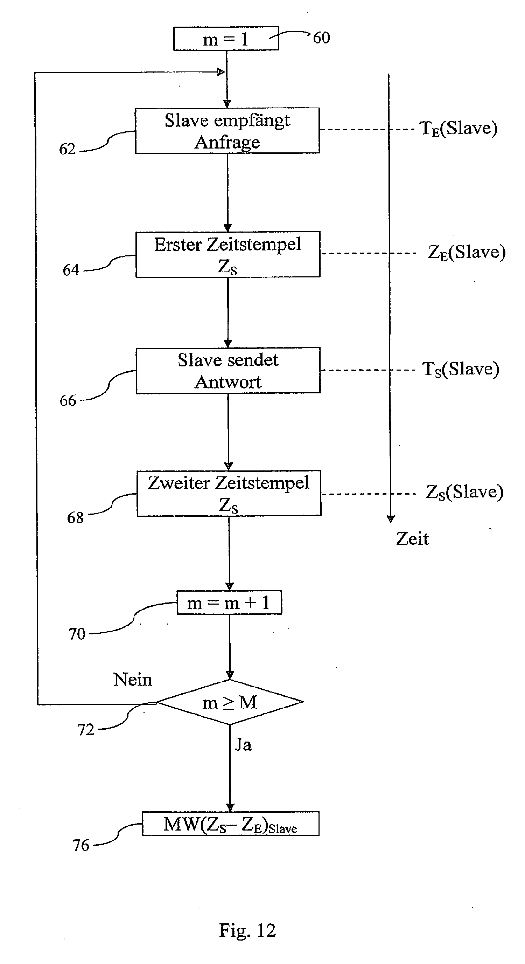

Die Fig. 11 und 12 zeigen beispielhafte Ablaufdiagramme zur Durchführung einer ersten und einer zweiten Messreihe zur Erfassung von Antwortzeiten am Master bzw. am Slave. Jeweils rechts von dem Ablaufdiagramm sind die einzelnen Ereignisse auf einem Zeitstrahl dargestellt, der jedoch nicht maßstäblich zu verstehen ist.

Im Folgenden ist die Erfassung der Antwortzeiten am Master mit Bezug auf Fig. 11 beschrieben. Der Einfachheit halber zeigt die Figur die Erfassung von Antwortzeiten in Bezug auf nur einen Slave, wobei der Fachmann verstehen wird, dass die Antworten und zugehörigen Antwortzeiten mehrerer Slaves in entsprechender Weise erfasst werden können.

Das Verfahren zur Ermittlung der mittleren Antwortzeiten jedes Slaves, gemessen am Master, beginnt in einem ersten Schritt 40 mit dem Einstellen eines Zählers auf m = 1, wenn das Messgerät an oder in der Nähe des Masters angeschlossen wird. Der Zähler dient der Bestimmung der Anzahl der Antwortzeiten, die in die Mittelwertbildung einfließen sollen. Zu einem Zeitpunkt $T_S$(Master) sendet ein Master ein Anfrage-Telegramm (Schritt 42) an ein Slave-Gerät, welches praktisch zur gleichen Zeit von einem Messgerät empfangen wird. Im Schritt 44 erzeugt das Messgerät an der Messstelle, die dem Master-Gerät zugeordnet ist, bei seiner nächsten Taktflanke einen ersten Zeitstempel $Z_S$(Master). Nach einer Laufzeit $T_L$, die abhängig ist von der Distanz zwischen Master und Slave, empfängt das Slave-Gerät im Schritt 46 das Anfrage-Telegramm. Das Anfrage-Telegramm hat eine vorgegebene Länge von x Bitzeiten, im Falle des FDL-Status-Telegramms gemäß der PROFIBUS-Norm 66 Bitzeiten. Ferner ist für jeden Slave eine minimale Wartezeit definiert, bevor er eine Antwort senden kann; diese beträgt in dem gewählten Ausführungsbeispiel der PROFIBUS-Norm 11 Bitzeiten. Somit sendet der Slave in einem nächsten Schritt 48 zu einer Zeit $T_S$(Slave), die in dem gewählten Ausführungsbeispiel frühestens 77 Bitzeiten nach der Empfangszeit $T_E$(Slave) liegt, ein Antwort-Telegramm. Dieses wird nach der Laufzeit $T_L$ zu einem Empfangszeitpunkt $T_E$(Master) von dem Master empfangen (Schritt 50). Praktisch zum gleichen Zeitpunkt empfängt auch das Messgerät das Antwort-Telegramm und erzeugt bei seiner nächsten Taktflanke einen zweiten Zeitstempel $Z_E$(Master) im Schritt 52.

Damit ist der Austausch und die Erfassung eines Telegramm-Paares abgeschlossen, und im nächsten Schritt 54 wird der Zähler m inkrementiert, also m = m + 1. Im nachfolgenden Schritt 56 wird geprüft, ob bereits eine vorgegebene Anzahl von Messungen durchgeführt wurde; d.h. m ≥ M ?, wobei M beispielsweise 100 beträgt. Wenn dies nicht der Fall ist, geht die Messschleife zurück zu Schritt 42, um einen weiteren Eingabe/Ausgabe-Zyklus zu beobachten. Sind ausreichend viele Messungen erfolgt, so werden die erfassten Sende- und Empfangszeiten am Master bzw. die korrespondierenden Zeitstempel $Z_S$(Master) und $Z_E$(Master) des Messgerätes zur Berechnung der mittleren Antwortzeiten im Schritt 58 übergeben. Zur Mittelwertbildung kann ein bekannter Mittelwert-Algorithmus, wie arithmetisches Mittel, verwendet werden. Zusätzlich ist es möglich, durch Verwenden eines geeigneten Filters Ausreißer, die beispielsweise durch singuläre Ereignisse verursacht sein können, in der Messreihe zu erkennen und vor der Mittelwertbildung herauszufiltern. Es ist auch möglich, durch geeignete Auswertung der Messreihe eine Abweichung in der Verteilung der Messwerte zwischen zwei Messreihen zu erkennen und hieraus gegebenenfalls Rückschlüsse auf eine Veränderung des Buszustands zu treffen.

Wenn die Messung für eines oder mehrere Slave-Geräte am Master abgeschlossen ist, kann das Messgerät vom Master getrennt und an oder hinter einen der Slaves angeschlossen werden. Das Messverfahren am Slave ist in Fig. 12 dargestellt.

Auch beim Anschließen des Messgerätes an einer zweiten Messposition, die den Slaves zugeordnet ist, wird zunächst ein Zähler auf m = 1 eingestellt, wie in Schritt 60 dargestellt. Das Messverfahren beginnt, wenn der Slave das erste definierte Anfrage-Telegramm zu einer Zeit $T_E$(Slave) empfängt, wie in Schritt 62 dargestellt ist. Zur gleichen Zeit empfängt auch das Messgerät das Telegramm und erzeugt im Schritt 64 einen ersten Zeitstempel $Z_E$(Slave). Der Slave sendet im Schritt 66 nach dem vollständigen Empfang des Anfrage-Telegramms und der definierten Wartezeit, wie oben erläutert, zu einer Zeit $T_S$(Slave) sein Antwort-Telegramm. Dieses wird wiederum zur gleichen Zeit von dem Messgerät empfangen, welches im Schritt 68 einen zweiten Zeitstempel $Z_S$(Slave) erzeugt. Wenn das Messgerät entfernt von dem Slave angeschlossen ist, empfängt es das Anfrage- und das Antwort-Telegramm jeweils nach einer gleichen Verzögerungszeit, so dass sich dieselbe Antwortzeit $Z_S$-$Z_E$ ergibt. Damit ist ein Messzyklus am Slave abgeschlossen, und im Schritt 70 wird der Zähler inkrementiert, d.h. m = m + 1. In einem nächsten Schritt 72 wird abgefragt, ob bereits eine vorgegebene Anzahl von Messungen erfolgt ist, m ≥ M ?. Wenn nein, durchläuft das Messgerät einen weiteren Messzyklus und geht zurück zu Schritt 62. Wenn ja, werden die ermittelten Antwortzeiten, $Z_S$ - $Z_E$, an einen Algorithmus zur Mittelwertbildung übergeben, der im Schritt 76 ausgeführt wird. Der Mittelwert wird auf dieselbe Weise berechnet wie die mittlere Antwortzeit am Master. Damit ist die Bestimmung der mittleren Antwortzeit eines Slaves abgeschlossen.

Wie oben erläutert, werden anschließend die mittleren Antwortzeiten an Master und Slave subtrahiert, um die Laufzeitverzögerung zwischen Master und Slave zu ermitteln.

Theoretisch kann durch eine Verlängerung der Messzeit eine beliebige Genauigkeit der Entfernungsmessung erreicht werden. In der Praxis wird die erreichbare Genauigkeit durch geräteinterne Vorgänge in den Busteilnehmern limitiert sein. Zum Beispiel sind alle gängigen Oszillatoren, die als Taktgeber in den Geräten verwendet werden, bis zu einem gewissen Grad temperaturabhängig. Je nach Wärmeentwicklung der elektronischen Bauteile im Slave können hier Variationen des Taktes zu leichten Veränderungen des Antwortverhaltens führen.

Eine wichtige Voraussetzung für die Anwendbarkeit des Verfahrens ist, dass sich der Buszustand während der verschiedenen Messungen nicht ändert. Die Messungen sollten deshalb möglichst zeitnah erfolgen. Eine kleine Änderung im Antwortverhalten des Slaves kann zu großen Fehlern in der Entfernungsmessung führen.

In der Praxis sollten auch die vom Messgerät erzeugten Zeitstempel hinreichend genau sein und keiner zeitlichen Drift, beispielsweise bei Temperaturänderungen unterliegen. Ferner sollte auch die Abtastrate des Messgerätes ausreichend hoch sein, damit eine hohe Zeitauflösung gewährleistet ist.

Erfindungsgemäß können Schwankungen in den Antwortzeiten eines Slaves ausgeglichen werden, unabhängig davon, ob ein Slave innerhalb der minimalen definierten Antwortzeit $minT_{SDR}$ antwortet oder erst mit einer zusätzlichen Verzögerung, sofern er für die Behandlung des Telegramms länger benötigt. Versuche und Simulationen an Feldbussystemen mit unterschiedlichen Slaves, die mit unterschiedlichen Baudraten betrieben wurden, haben gezeigt, dass das erfindungsgemäße Verfahren sowohl im ersten Fall, wenn der Slave seine Antwort unmittelbar nach Ablauf der minimalen Wartezeit sendet, als auch im zweiten Fall, wenn der Slave antwortet, sobald er mit der Behandlung eines Telegramms fertig ist, gute Ergebnisse liefert.

Wie eingangs erwähnt kann eine Änderung des Buszustands, der Umgebungstemperatur und dergleichen zu einer Änderungen der mittleren Antwortzeit führen. Dadurch würden Messergebnisse verfälscht. Es sollte daher bei dem erfindungsgemäßen Verfahren darauf geachtet werden, dass sich der Buszustand, also der Gesamtzustand der angeschlossenen Geräte und ihre Aktivitäten, zwischen den Messungen nicht verändert. Gleiches gilt für Umgebungstemperatur, Feuchtigkeit und dergleichen.

**Patentansprüche**

1. Verfahren zur Bestimmung der Topologie eines seriellen asynchronen Datenbusses, an den wenigstens ein erster Busteilnehmer (10) und ein zweiter Busteilnehmer (12) angeschlossen sind, die über ein vorgegebenes Buszugriffsprotokoll kommunizieren, das definierte Anfrage- und Antwort-Telegramme umfasst, mit den Verfahrensschritten:

   Senden von Anfrage-Telegrammen von dem ersten Busteilnehmer (10) und Empfangen der Anfrage-Telegramme an dem zweiten Busteilnehmer (12), und
   Senden jeweils eines Antwort-Telegramms von dem zweiten Busteilnehmer (12) in Antwort auf jedes Anfrage-Telegramm und Empfangen der Antwort-Telegramme an dem ersten Busteilnehmer (10),
   **gekennzeichnet durch**:

   Bestimmen einer ersten Vielzahl von zeitlichen Differenzen zwischen dem Empfangen eines jeweiligen Anfrage-Telegramms des ersten Busteilnehmers (10) und dem Empfangen des jeweils zugehörigen Antwort-Telegramms des zweiten Busteilnehmers (12) an einer ersten Messstelle (1) an dem Datenbus, Bestimmen einer zweiten Vielzahl von zeitlichen Differenzen zwischen dem Empfangen des jeweiligen Anfrage-Telegramms des ersten Busteilnehmers (10) und dem Empfangen des jeweils zugehörigen Antwort-Telegramms des zweiten Busteilnehmers (12) an einer zweiten Messstelle (2) an dem Datenbus, wobei die erste Messstelle (1) an dem ersten Busteilnehmer (10) oder, vom zweiten Busteilnehmer (12) aus gesehen, hinter dem ersten Busteilnehmer (10) liegt, und die zweite Messstelle (2) an dem zweiten Busteilnehmer (12) oder, vom ersten Busteilnehmer (10) aus gesehen, hinter dem zweiten Busteilnehmer (12) liegt, Berechnen einer ersten mittleren Antwortzeit $\overline{T}_{res1}$ für den zweiten Busteilnehmer (12) aus der bestimmten ersten Vielzahl von zeitlichen Differenzen, Berechnen einer zweiten mittleren Antwortzeit $\overline{T}_{res2}$ für den zweiten Busteilnehmer (12) aus der bestimmten zweiten Vielzahl von zeitlichen Differenzen, Berechnen einer Laufzeitverzögerung $T_L$ als Hälfte der Differenz aus der ersten mittleren Antwortzeit $\overline{T}_{res1}$ und der zweiten mittleren Antwortzeit $\overline{T}_{res2}$, wodurch eine Distanz zwischen dem ersten Busteilnehmer (10) und dem zweiten Busteilnehmer (12) abgeleitet werden kann.

2. Verfahren nach Anspruch 1, wobei die zweite Messstelle (2) an einem Busende (30, 32, 34, 36) hinter dem letzten zweiten Busteilnehmer (12) liegt.

3. Verfahren nach Anspruch 1 oder 2, wobei zur Bestimmung der ersten Vielzahl von zeitlichen Differenzen zwischen dem Empfangen des jeweiligen Anfrage-Telegrammes des ersten Busteilnehmers (10) und dem Empfangen des jeweils zugehörigen Antwort-Telegrammes des zweiten Busteilnehmers (12) an der ersten Messstelle (1) und zur Bestimmung der zweiten Vielzahl von zeitlichen Differenzen zwischen dem Empfangen des jeweiligen Anfrage-Telegramms des ersten Busteilnehmers (10) und dem Empfangen des jeweils zugehörigen Antwort-Telegramms des zweiten Busteilnehmers (12) an der zweiten Messstelle (2) dasselbe Messgerät verwendet wird, das nacheinander an der ersten Messstelle (1) und an der zweiten Messstelle (2) angeschlossen wird.

4. Verfahren nach Anspruch 2, wobei der erste Busteilnehmer (10), der zweite Busteilnehmer (12) und das Messgerät mit eigenen, nicht synchronisierten Taktfrequenzen arbeiten.

5. Verfahren nach einem der vorangehenden Ansprüche, wobei die zweite mittlere Antwortzeit $\overline{T}_{res2}$ für den zweiten Busteilnehmer (12) vorab ermittelt wird.

6. Verfahren nach einem der vorangehenden Ansprüche, wobei die Laufzeitverzögerung $T_L$ gemäß folgender Formel berechnet wird:

$$T_L = \frac{(\overline{T}_{res1} - \overline{T}_{res2})}{2}.$$

**7.** Verfahren nach einem der vorangehenden Ansprüche, wobei die Anfrage- und Antwort-Telegramme unter einem oder mehreren der folgenden Telegramme ausgewählt werden:

reguläre Telegramme des Buszugriffsprotokolls, die während eines regulären Datenverkehrs auf dem Datenbus ausgetauscht werden, Datenaustauschtelegramme, die in jedem Ein/Ausgabe-Zyklus eines Busteilnehmers einmal ausgetauscht werden, und FDL-Status-Telegramme.

**8.** Verfahren nach einem der vorangehenden Ansprüche, wobei der erste Busteilnehmer (10) ein Master-Gerät (M) ist und der zweite Busteilnehmer (12) ein Slave-Gerät (S1-S8) ist und wobei

(a) das Master-Gerät (M) zu einem Sende-Zeitpunkt $T_0$ ein Anfrage-Telegramm an das Slave-Gerät (S1-S8) sendet,
(b) das Messgerät an der ersten Messstelle (1) das Anfrage-Telegramm empfängt und bei einer nächsten Taktflanke einen ersten Zeitstempel $Z_s$ erzeugt,
(c) das Slave-Gerät (S1-S8) nach einer Laufzeit $T_L$, die abhängig ist von der Distanz zwischen dem Master-Gerät (M) und Slave-Gerät (S1-S8), das Anfrage-Telegramm empfängt, wobei das Anfrage-Telegramm eine Länge von x Bitzeiten aufweist,
(d) das Slave-Gerät (S1-S8) nach dem vollständigen Empfang des Anfrage-Telegramms und einer Wartezeit von y Bitzeiten das Antwort-Telegramm sendet,
(e) das Master-Gerät (M) nach der Laufzeit $T_L$ das Antwort-Telegramm zu einem Zeitpunkt $T_E$ empfängt,
(f) das erste Messgerät (1) das Antwort-Telegramm empfängt und bei seiner nächsten Taktflanke einen zweiten Zeitstempel $Z_E$ erzeugt, und
(g) aus der Differenz der beiden Zeitstempel ($Z_E$, $Z_S$) eine Antwortzeit $T_{res}$ ermittelt wird, und

wobei die Schritte (a) bis (g) mehrmals wiederholt werden, wobei sich durch Schwankungen in der Wartezeit des Slave-Geräts (S1-S8) Streuungen der Antwortzeiten ergeben, die durch einen Mittelwert-Algorithmus zur Bildung der ersten mittleren Antwortzeit $\overline{T}_{res1}$ ausgeglichen werden.

**9.** Verfahren nach Anspruch 8, wobei mehrere Slave-Geräte (S1-S8) an den Datenbus angeschlossen sind, die mit dem Master-Gerät (M) wiederholt Anfrage- und Antwort-Telegramme austauschen.

**10.** Verfahren nach Anspruch 9, wobei der Schritt des Bestimmens einer ersten Vielzahl von zeitlichen Differenzen zwischen dem Empfangen eines jeweiligen Anfrage-Telegrammes und dem Empfangen des jeweils zugehörigen Antwort-Telegrammes an der ersten Messstelle (1) ein Bestimmen der zeitlichen Differenzen von Anfrage- und Antwort-Telegramm-Paaren umfasst, die unterschiedlichen Slave-Geräten (S1-S8) zugeordnet sind, und wobei der Schritt des Berechnens der ersten mittleren Antwortzeit $\overline{T}_{res1}$ das Berechnen einer mittleren Antwortzeit für jedes der Slave-Geräte (S1-S8) an dem Master-Gerät umfasst.

**11.** Verfahren nach Anspruch 10, wobei für jedes der Slave-Geräte (S1-S8) die Differenz aus der zugehörigen mittleren Antwortzeit an dem Master-Gerät (M) und der mittleren Antwortzeit, die dem jeweiligen Slave-Gerät (S1-S8) zugeordnet ist, berechnet und die jeweilige Laufzeitverzögerung $T_L$ und somit die jeweilige Distanz zwischen dem Master-Gerät (M) und jedem der Slave-Geräte (S1-S8) aus den jeweiligen Differenzen abgeleitet wird.

**12.** Verfahren nach Anspruch 11, wobei aus den jeweiligen Laufzeitverzögerungen TL zwischen dem Master-Gerät (M) und den mehreren Slave-Geräten (S1-S8) eine Reihenfolge der Slave-Geräte (S1-S8) entlang des Datenbusses oder eines Datenbusabschnittes (20, 22, 24) mit Linien-Topologie bestimmt wird.

**13.** Verfahren nach Anspruch 12, wobei dann, wenn für mehrere Slave-Geräte (S1-S8) dieselbe oder nahezu dieselbe Laufzeitverzögerung TL ermittelt wird, eine Datenbusabzweigung erkannt wird und die folgenden weiteren Verfahrensschritte ausgeführt werden:

Bestimmen einer dritten Vielzahl von zeitlichen Differenzen für ein Slave-Gerät (S1-S8) zwischen dem Empfangen von Anfrage-Telegrammen und dem Empfangen von zugehörigen Antwort-Telegrammen an einer dritten Messstelle (3, 4) an dem Datenbus, wobei die dritte Messstelle (3, 4) hinter der Datenbusabzweigung (22, 24) an dem Slave-Gerät (S1-S8) oder, vom Master-Gerät (M) aus gesehen, hinter dem Slave-Gerät (S1-S8) liegt, und Berechnen einer dritten mittleren Antwortzeit $\overline{T}_{res3}$ für das Slave-Gerät (S1-S8), das in der Datenbusabzweigung (22, 24) liegt, aus der bestimmten dritten Vielzahl von zeitlichen Differenzen.

14. Verfahren nach einem der vorangehenden Ansprüche, wobei die Bestimmung der ersten Vielzahl von zeitlichen Differenzen zwischen dem Empfangen des jeweiligen Anfrage-Telegrammes des ersten Busteilnehmers (10) und dem Empfangen des jeweils zugehörigen Antwort-Telegrammes des zweiten Busteilnehmers (12) an der ersten Messstelle (1) und die Bestimmung der zweiten oder dritten Vielzahl von zeitlichen Differenzen zwischen dem Empfangen des jeweiligen Anfrage-Telegramms und dem Empfangen des zugehörigen Antwort-Telegramms an einer zweiten oder dritten Messstelle (2, 3, 4) unter gleichen Betriebsbedingungen in Bezug auf Zustand und physikalische Parameter des Datenbusses ausgeführt werden.

## Claims

1. A method for determining the topology of a serial, asynchronous data bus, to which at least a first bus participant (10) and a second bus participant (12) are connected, who communicate via a predefined bus access protocol, comprising defined request and response telegrams, wherein the method comprises the following steps:

   transmitting of request telegrams from the first bus participant (10) and receiving the request telegrams at the second bus participant (12), and
   transmitting a respective response telegram from the second bus participant (12) in response to each request telegram and receiving the request telegrams at the first bus participant (10),
   **characterized by**:

   determining a first plurality of time differences between said receiving of a respective request telegram of the first bus participant (10) and said receiving of the respective corresponding response telegram of the second bus participant (12) at a first measurement location (1) at the data bus,
   determining a second plurality of time differences between said receiving of said respective response telegram of said first bus participant (10) and said receiving of said respective corresponding response telegram of said second bus participant (12) at a second measurement location (2) at the data bus,
   wherein the first measurement location (1) is located at the first bus participant (10), or, from the perspective of the second bus participant (12), is located behind the first bus participant (10), and the second measurement location (2) is located at the second bus participant (12), or, from the perspective of the first bus participant (10), is located behind the second bus participant (12),
   calculating a first average response time $\overline{T}_{res1}$ for the second bus participant (12) from the determined first plurality of time differences,
   calculating a second average response time $\overline{T}_{res2}$ for the second bus participant (12) from the determined second plurality of time differences,
   calculating a transmit time delay $T_L$ as half of the difference between the first average response time $\overline{T}_{res1}$ and the second average response time $\overline{T}_{res2}$, whereby a distance between the first bus participant (10) and the second bus participant (12) can be deduced.

2. The method according to claim 1, wherein the second measurement location (2) is located at an end of the bus (30, 32, 34, 36) behind the last second bus participant (12).

3. The method according to claim 1 or 2, wherein, for determining the first plurality of time differences between said receiving of said respective request telegram of said first bus participant (10) and said receiving of said respective corresponding response telegram of said second bus participant (12) at the first measurement location (1) and for determining the second plurality of time differences between said receiving of said respective request telegram of said first bus participant (10) and said receiving of said respective corresponding response telegram of said second bus participant (12) at said second measurement location (2), the same measurement device is used, which is subsequently connected to the first measurement location (1) and the second measurement location (2).

4. The method according to claim 2, wherein the first bus participant (10), the second bus participant (12) and the measurement device operate with their own unsynchronized clock frequencies.

5. The method according to any one of the preceding claims, wherein the second average response time $\overline{T}_{res2}$ for the second bus participant (12) is determined in advance.

6. The method according to any one of the preceding claims, wherein the transmit time delay $T_L$ is calculated according to the following formula:

$$T_L = \frac{(\overline{T}_{res1} - \overline{T}_{res2})}{2}.$$

7. The method according to one of the preceding claims, wherein the request and response telegrams are selected from one or more of the following telegrams:

   regular telegrams of said bus access protocol, which are exchanged during regular data traffic on said data bus, data exchange telegrams, which are exchanged once during each input/output cycle of a bus participant, and FDL status telegrams.

8. The method according to any one of the preceding claims, wherein said first bus participant (10) is a master device (M) and said second bus participant (12) is a slave device (S1-S8) and wherein

   (a) said master device (M) transmits a request telegram to said slave device (S1-S8) at a transmit time $T_o$,
   (b) the measurement device at the first measurement location (1) receives the request telegram and creates a time stamp Zs at a next clock edge,
   (c) said slave device (S1-S8) receives the request telegram after a transfer time $T_L$, which depends on the distance between said master device (M) and said slave device (S1-S8), wherein said request telegram comprises a length of x bit times,
   (d) said slave device (S1-S8) transmits said response telegram after the complete receipt of said request telegram and a latency of y bit times,
   (e) said master device (M) receives said response telegram after the transfer time $T_L$ at a time $T_E$,
   (f) said first measurement device (1) receives said response telegram and creates a second time stamp $Z_E$ at its next clock edge, and
   (g) from the difference of both said time stamps ($Z_E$, Zs), a response time $T_{res}$ is determined, and

   wherein said steps (a) to (g) are repeated several times, wherein fluctuations in said slave device (S1-S8) latencies create fluctuations of said response times, which are compensated by an average algorithm for establishing said first average response time $\overline{T}_{res1}$.

9. The method according to claim 8, wherein several slave devices (S1-S8) are connected to said data bus, which repeatedly exchange request and response telegrams with said master device (M).

10. The method according to claim 9, wherein the step of said determining of a first plurality of time differences between said receiving of a respective request telegram and said receiving of a respective corresponding response telegram at the first measurement location (1), comprises determining the time differences between request and response telegram pairs, which are associated with different slave devices (S1-S8), and
    wherein the step of said calculating said first average response time $\overline{T}_{res1}$ comprises said calculating of an average response time for each of said slave devices (S1-S8) at said master device.

11. The method according to claim 10, wherein, for each of said slave devices (S1-S8), said difference is calculated from said corresponding average response time at said master device (M) and said average response time, which is associated with said respective slave device (S1-S8), and said respective transfer time delay $T_L$ and thus said respective distance between said master device (M) and each of said slave devices (S1-S8) is deduced from said respective differences.

12. The method according to claim 11, wherein an order of said slave devices (S1-S8) along said data bus or a portion of said data bus (20, 22, 24) comprising a line topology is determined from said respective transfer time delay $T_L$

between said master device (M) and said several slave devices (S1-S8).

13. The method according to claim 12, wherein, if for several slave devices (S1-S8) the same or nearly the same transfer time delay $T_L$ is determined, a data bus branch is detected, and the following further method steps are carried out:

determining a third plurality of time differences for a slave device (S1-S8) between said receiving of request telegrams and said receiving of corresponding response telegrams at a third measurement location (3, 4) at said data bus,
wherein said third measurement location (3, 4) is located behind the data bus branch (22, 24) at said slave device (S1-S8), or, from the perspective of said master device (M), located behind said slave device (S1-S8), and calculating a third average response time $\overline{T}_{res3}$ for said slave device (S1-S8), which is located in said data bus branch (22, 24), from said determined third plurality of time differences.

14. The method according to any one of the preceding claims, wherein said determining of said first plurality of time differences between said receiving of said respective request telegram of said first bus participant (10) and said receiving of said respective corresponding response telegram of said second bus participant (12) at said first measurement location (1) and said determining of said second or third plurality of time differences between said receiving of said respective request telegram and said receiving of said corresponding response telegram at a second or third measurement location (2, 3, 4) can be carried out under the same operating conditions in relation to a state and physical parameters of said data bus.

## Revendications

1. Procédé de détermination de la topologie d'un bus de données série asynchrone auquel sont connectés au moins un premier abonné au bus (10) et un deuxième abonné au bus (12) qui communiquent au moyen d'un protocole d'accès au bus prédéfini qui comprend des télégrammes de demande et de réponse définis, comprenant les étapes de procédé suivantes :

envoi de télégrammes de demande par le premier abonné au bus (10) et réception des télégrammes de demande au deuxième abonné au bus (12), et
envoi d'un télégramme de réponse par le deuxième abonné au bus (12) en réponse à chaque télégramme de demande et réception des télégrammes de réponse par le premier abonné au bus (10),
**caractérisé par** les étapes suivantes :

détermination d'une première pluralité de différences de temps entre la réception d'un télégramme de demande respectif du premier abonné au bus (10) et la réception du télégramme de réponse correspondant du deuxième abonné au bus (12) à un premier point de mesure (1) sur le bus de données,
détermination d'une deuxième pluralité de différences de temps entre la réception du télégramme de demande respectif du premier abonné au bus (10) et la réception du télégramme de réponse correspondant du deuxième abonné au bus (12) à un deuxième point de mesure (2) sur le bus de données,
le premier point de mesure (1) étant situé au niveau du premier abonné au bus (10) ou, vu du deuxième abonné au bus (12), derrière le premier abonné au bus (10), et le deuxième point de mesure (2) étant situé au niveau du deuxième abonné au bus (12) ou, vu du premier abonné au bus (10), derrière le deuxième abonné au bus (12),
calcul d'un premier temps de réponse moyen $\overline{T}_{res1}$ pour le deuxième abonné au bus (12) à partir de la première pluralité de différences de temps déterminée,
calcul d'un deuxième temps de réponse moyen $\overline{T}_{res2}$ pour le deuxième abonné au bus (12) à partir de la deuxième pluralité de différences de temps déterminée,
calcul d'un retard de propagation $T_L$ comme moitié de la différence entre le premier temps de réponse moyen $\overline{T}_{res1}$ et le deuxième temps de réponse moyen $\overline{T}_{res2}$, une distance entre le premier abonné au bus (10) et le deuxième abonné au bus (12) pouvant en être déduite.

2. Procédé selon la revendication 1, selon lequel le deuxième point de mesure (2) est situé à une extrémité de bus (30, 32, 34, 36) derrière le dernier deuxième abonné au bus (12).

3. Procédé selon la revendication 1 ou 2, selon lequel, pour déterminer la première pluralité de différences de temps entre la réception du télégramme de demande respectif du premier abonné au bus (10) et la réception du télégramme de réponse correspondant du deuxième abonné au bus (12) au premier point de mesure (1) et pour déterminer la deuxième pluralité de différences de temps entre la réception du télégramme de demande respectif du premier abonné au bus (10) et la réception du télégramme de réponse correspondant du deuxième abonné au bus (12) au deuxième point de mesure (2), on utilise le même appareil de mesure qui est connecté successivement au premier point de mesure (1) et au deuxième point de mesure (2).

**4.** Procédé selon la revendication 2, selon lequel le premier abonné au bus (10), le deuxième abonné au bus (12) et l'appareil de mesure travaillent à des fréquences d'horloge propres, non synchronisées.

**5.** Procédé selon l'une des revendications précédentes, selon lequel le deuxième temps de réponse moyen $\overline{T}_{res2}$ pour le deuxième abonné au bus (12) est déterminé préalablement.

**6.** Procédé selon l'une des revendications précédentes, selon lequel le retard de propagation $T_L$ est calculé selon la formule suivante :

$$T_L = \frac{(\overline{T}_{res1} - \overline{T}_{res2})}{2}$$

**7.** Procédé selon l'une des revendications précédentes, selon lequel les télégrammes de demande et de réponse sont sélectionnés parmi un ou plusieurs des télégrammes suivants :

télégrammes réguliers du protocole d'accès au bus échangés pendant un trafic de données régulier sur le bus de données, télégrammes d'échange de données échangés une fois dans chaque cycle d'entrée/sortie d'un abonné au bus et télégrammes d'état FDL.

**8.** Procédé selon l'une des revendications précédentes, selon lequel le premier abonné au bus (10) est un appareil maître (M) et le deuxième abonné au bus (12) un appareil esclave (S1-S8) et selon lequel

(a) l'appareil maître (M) envoie un télégramme de demande à l'appareil esclave (S1-S8) à un instant d'envoi $T_o$,
(b) l'appareil de mesure au premier point de mesure (1) reçoit le télégramme de demande et génère sur un prochain flanc d'horloge un premier horodatage Zs,
(c) l'appareil esclave (S1-S8) reçoit le télégramme de demande après un temps de propagation $T_L$ qui dépend de la distance entre l'appareil maître (M) et l'appareil esclave (S1-S8), lequel télégramme de demande présente une longueur de x temps de bit,
(d) après la réception complète du télégramme de demande et un temps d'attente de y temps de bit, l'appareil esclave (S1-S8) envoie le télégramme de réponse,
(e) l'appareil maître (M) reçoit, après le temps de propagation $T_L$, le télégramme de réponse à un instant $T_E$,
(f) le premier appareil de mesure (1) reçoit le télégramme de réponse et génère sur son prochain flanc d'horloge un deuxième horodatage $Z_E$, et
(g) un temps de réponse $T_{res}$ est déterminé à partir de la différence des deux horodatages ($Z_E$, $Z_S$), et

les étapes (a) à (g) étant répétées plusieurs fois, les dispersions des temps de réponse qui résultent de fluctuations dans le temps d'attente de l'appareil esclave (S1-S8) étant compensées par un algorithme de valeur moyenne pour former le premier temps de réponse moyen $\overline{T}_{res1}$.

**9.** Procédé selon la revendication 8, selon lequel au bus de données sont connectés plusieurs appareils esclaves (S1-S8) qui échangent de manière répétée des télégrammes de demande et de réponse avec l'appareil maître (M).

**10.** Procédé selon la revendication 9, selon lequel l'étape de détermination d'une première pluralité de différences de temps entre la réception d'un télégramme de demande respectif et la réception du télégramme de réponse correspondant au premier point de mesure (1) comprend une détermination des différences de temps de paires de télégrammes de demande et de réponse qui sont associées à différents appareils esclaves (S1-S8), et l'étape de calcul du premier temps de réponse moyen $\overline{T}_{res1}$ comprenant le calcul d'un temps de réponse moyen pour chacun des appareils esclaves (S1-S8) à l'appareil maître.

**11.** Procédé selon la revendication 10, selon lequel, pour chacun des appareils esclaves (S1-S8), la différence entre le temps de réponse moyen correspondant à l'appareil maître (M) et le temps de réponse moyen associé à l'appareil esclave (S1-S8) respectif est calculé, et le retard de propagation $T_L$ respectif et donc la distance respective entre l'appareil maître (M) et chacun des appareils esclaves (S1-S8) sont déduits des différences respectives.

**12.** Procédé selon la revendication 11, selon lequel un ordre des appareils esclaves (S1-S8) le long du bus de données ou d'une section de bus de données (20, 22, 24) à topologie linéaire est déterminé à partir des retards de propagation $T_L$ respectifs entre l'appareil maître (M) et les plusieurs appareils esclaves (S1-S8).

**13.** Procédé selon la revendication 12, selon lequel, lorsque le même ou presque le même retard de propagation $T_L$ est déterminé pour plusieurs appareils esclaves (S1-S8), une bifurcation de bus de données est détectée et les étapes de procédé supplémentaires suivantes sont exécutées :

détermination d'une troisième pluralité de différences de temps pour un appareil esclave (S1-S8) entre la réception de télégrammes de demande et la réception de télégrammes de réponse correspondants à un troisième point de mesure (3, 4) sur le bus de données, le troisième point de mesure (3, 4) étant situé derrière la bifurcation de bus de données (22, 24) au niveau de l'appareil esclave (S1-S8) ou, vu de l'appareil maître (M), derrière l'appareil esclave (S1-S8), et

calcul d'un troisième temps de réponse moyen $\overline{T}_{res3}$ pour l'appareil esclave (S1-S8) situé dans la bifurcation de bus de données (22, 24) à partir de la troisième pluralité de différences de temps déterminée.

**14.** Procédé selon l'une des revendications précédentes, selon lequel la détermination de la première pluralité de différences de temps entre la réception du télégramme de demande respectif du premier abonné au bus (10) et la réception du télégramme de réponse correspondant du deuxième abonné au bus (12) au premier point de mesure (1), et la détermination de la deuxième ou troisième pluralité de différences de temps entre la réception du télégramme de demande respectif et la réception du télégramme de réponse correspondant à un deuxième ou troisième point de mesure (2, 3, 4) sont effectuées dans les mêmes conditions de service en termes d'état et de paramètres physiques du bus de données.

Fig. 1

Fig. 2

Fig. 3

Fig. 4

Fig. 5

Fig. 6

Fig. 7

Fig. 8

Fig. 9

Fig. 10

Fig. 11

$m = 1$ — 60

62 — Slave empfängt Anfrage — — — — — $T_E$(Slave)

64 — Erster Zeitstempel $Z_S$ — — — — — $Z_E$(Slave)

66 — Slave sendet Antwort — — — — — $T_S$(Slave)

68 — Zweiter Zeitstempel $Z_S$ — — — — — $Z_S$(Slave)

Zeit

70 — $m = m + 1$

Nein

72 — $m \geq M$

Ja

76 — $MW(Z_S - Z_E)_{Slave}$

Fig. 12

**IN DER BESCHREIBUNG AUFGEFÜHRTE DOKUMENTE**

**In der Beschreibung aufgeführte Patentdokumente**

- WO 0228061 A1
- DE 10048741 C1
- DE 102005055429 A1
- DE 102010000249 A1
- DE 102006051144 A1
- US 7308517 B1